# FASCICULE DE BREVET EUROPEEN

(11) **EP 2 658 677 B1**
(45) Date de publication et mention de la délivrance du brevet: **19.08.2015**
(21) Numéro de dépôt: 11813883.3
(22) Date de dépôt: 29.12.2011
(51) Int. Cl.: B23Q 5/32, B23Q 5/22

(54) **DISPOSITIF PORTATIF D'USINAGE, PLUS PARTICULIÈREMENT DE PERÇAGE**
TRAGBARE BEARBEITUNGSVORRICHTUNG, INSBESONDERE ZUM BOHREN
HANDHELD MACHINING DEVICE, PARTICULARLY FOR BORING

(30) Priorité: 30.12.2010 FR 1005188
(43) Date de publication de la demande: 06.11.2013
(73) Titulaire: Guerin, Sylvain, 59113 Seclin (FR)
(72) Inventeur: Guerin, Sylvain, 59113 Seclin (FR)
(74) Mandataire: Bureau Duthoit Legros Associés
(86) Numéro de dépôt international: PCT/FR2011/000681
(87) Numéro de publication internationale: WO 2012/089936

(56) Documents cités:
- EP-A1- 2 108 478
- DE-A1- 3 323 443
- GB-A- 783 820
- GB-A- 866 862
- US-A1- 2006 269 369
- Doug Moore ET AL: "Pneumatic or electric actuators: When and why | Mechanical Drives content from Machine Design", , 1 August 2000 (2000-08-01), pages 1-5, XP055114672, Retrieved from the Internet: URL:http://machinedesign.com/mechanical-dr ives/pneumatic-or-electric-actuators-when- and-why [retrieved on 2014-04-22]

## Description

L'invention est relative à un dispositif portatif d'usinage, plus particulièrement de perçage.

Dans le domaine des outils portatifs de perçage, en particulier dans l'aéronautique, il est connu des outils portatifs de perçage qui permettent non seulement d'animer en rotation l'outil de coupe, mais également d'animer l'outil de coupe à l'avancement ou au recul, de manière contrôlée, grâce à un actionneur linéaire dudit outil portatif.

L'art antérieur connaît par exemple des documents EP-2.108.478 ou encore WO-2009/128757 de tels outils portatifs. Dans les dispositifs de ces deux documents, un premier moteur permet, par l'intermédiaire d'un système vis/écrou de contrôler l'avance ou le recul de l'outil de coupe, tandis qu'un deuxième moteur permet de transmettre un couple de rotation à l'outil de coupe, par l'intermédiaire d'une transmission à arbre cannelé. Dans les dispositifs de ces deux documents, le premier moteur et le deuxième moteur sont fixes l'un par rapport à l'autre. Le deuxième moteur, transmettant le couple de rotation à l'outil, est solidaire rigidement du boîtier du mécanisme.

On connaît également de l'état de l'art le document US-2006/0269369 un dispositif d'usinage portatif qui associe, d'une part un moteur pneumatique pour actionner en rotation un outil de coupe, et d'autre part un actionneur linéaire comprenant une vis à bille et un moteur électrique, du type pas à pas permettant le déplacement simultané en translation de l'ensemble moteur pneumatique et outil de coupe, à l'avance et au recul. Dans le dispositif de ce document, le moteur pneumatique et le moteur électrique se déplacent en translation, l'un par rapport à l'autre, lors de l'avance ou le recul de l'outil de coupe.

Dans le dispositif de ce document US-2006/0269369, le moteur électrique, pas à pas, est couplé à un codeur angulaire qui produit un signal représentatif de la position de l'actionneur linéaire. Ce signal est exploité par une électronique de contrôle permettant le contrôle du moteur électrique de l'actionneur linéaire. Cet électronique est un élément séparé et distinct du dispositif portatif, relié notamment au moteur électrique de l'outil au moyen d'un câble électrique flexible. L'utilisation d'un moteur pneumatique nécessite pour faire tourner l'outil de coupe à des faibles vitesses (inférieures à 8000 t/min) de prévoir un réducteur entre l'outil et la sortie du moteur. Un tel dispositif ne permet aucun contrôle de la rotation de l'outil de coupe.

Le but de la présente invention est de proposer un dispositif portatif d'usinage permettant d'obtenir des précisions de coupe de l'ordre du micron, de performance améliorée quant à l'état de la technique connu.

D'autres buts et avantages de la présente invention apparaîtront au cours de la description qui va suivre, qui n'est donnée qu'à titre indicatif et qui n'a pas pour but de la limiter.

L'invention concerne un dispositif portatif d'usinage, en particulier de perçage conforme à la revendication 1.

Selon des caractéristiques optionnelles, prises seules ou en combinaison :
- le rotor du moteur est extérieur au stator dudit moteur ;
- ledit moteur est dit premier moteur et ledit actionneur linaire comprend un système vis à billes et un deuxième moteur ;
- le deuxième moteur est un moteur électrique et le rotor du deuxième moteur est en montage direct sur la vis de l'actionneur linéaire, solidaire rigidement avec ladite vis.
- le deuxième support embarque ledit deuxième moteur, le stator du dudit deuxième moteur étant solidaire en translation avec ledit deuxième support, l'écrou du système vis à billes étant solidaire en translation avec ledit premier support, ou alternativement :
- le premier support embarque ledit deuxième moteur, le stator du dudit deuxième moteur étant solidaire en translation avec ledit premier support, l'écrou du système vis à billes étant solidaire en translation avec ledit deuxième support ;
- le rotor dudit deuxième moteur est extérieur au stator dudit deuxième moteur ;
- l'axe de rotation du porte-outil et l'axe de rotation de la vis du système vis à billes sont parallèles et confondus ;
- l'axe de rotation du porte-outil et l'axe de rotation de la vis du système vis à billes sont parallèles et non confondus, ledit ensemble porte-outil et premier moteur étant positionné juxtaposé latéralement audit actionneur linéaire.
- le dispositif présente un codeur angulaire ciblant la rotation de la vis du système vis à billes, ainsi qu'une électronique de contrôle et de puissance pour le contrôle dudit premier moteur et dudit deuxième moteur présentant pour entrée le signal émis par ledit codeur angulaire ;
- le dispositif présente, outre le codeur angulaire ciblant la rotation de la vis, dit premier codeur angulaire, un deuxième codeur angulaire ciblant la rotation dudit porte-outil, ladite électronique de contrôle et de puissance pour le contrôle dudit premier moteur et dudit deuxième moteur présentant pour entrée, outre le signal émis par le premier codeur angulaire, le signal émis par ledit deuxième codeur angulaire ;
- ledit mécanisme est intégré dans un boîtier notamment pourvue d'une poignée, ladite électronique de contrôle et de puissance étant intérieure et intégrée audit boîtier dudit dispositif portatif ;
- le porte-outil présente un arbre de rotation solidaire du rotor moteur ledit arbre de rotation présentant une canalisation pour un fluide destiné à lubrifier un outil coupe, ainsi qu'un joint tournant assurant l'étanchéité entre une extrémité de l'arbre de rotation et un port d'entrée pour le fluide ;
- ledit actionneur linaire est constitué par un moteur linéaire.

L'invention sera mieux comprise à la lecture de la description suivante accompagnée de l'unique figure en annexe qui illustre schématiquement le mécanisme de l'outil portatif conforme à l'invention, selon un mode de réalisation.

Aussi, l'invention concerne un dispositif portatif 1 d'usinage, en particulier de perçage, présentant un mécanisme comprenant :
- un premier support 20 embarquant :
   - un porte-outil 2,
   - un moteur 3, 4 agencé pour animer le porte-outil 2 d'un mouvement de rotation,
- un deuxième support 30 et des moyens 40 de guidage en translation entre le premier support 20 et ledit deuxième support 30,
- un actionneur linéaire 5 permettant l'éloignement du premier support 20 par rapport audit deuxième support 30 et le rapprochement du premier support 20 par rapport audit deuxième support 30.

Selon l'invention, le moteur 3, 4 est un moteur électrique et le rotor 4 du premier moteur 3, 4 est en montage direct sur le porte-outil 2, solidaire rigidement avec ledit porte outil 2.

Le montage direct du rotor 4 sur le porte-outil 2 permet d'éliminer la présence de réducteurs à engrenage entre ces deux éléments 2,4, permettant non seulement de diminuer l'encombrement du dispositif 1 mais également d'éviter la présence d'un jeu inhérent aux engrenages d'un réducteur.

Le rotor 4 du premier moteur 3, 4 peut être extérieur au stator 3 dudit premier moteur 3, 4. L'utilisation d'un moteur à rotor externe pour le premier moteur 3, 4 permet de limiter le nombre de roulements 19 pour le guidage simultané en rotation du rotor 4.

Selon l'invention, l'actionneur linéaire 5 permet ainsi de déplacer en translation au moins l'ensemble porte-outil 2 et premier moteur 3, 4. Le premier moteur 3, 4 permet d'animer le porte-outil 2 d'un mouvement de rotation, dont l'axe de rotation est parallèle à l'axe de déplacement de l'actionneur linéaire 5.

Bien entendu, ce mécanisme peut être intégré dans un boîtier notamment plastique, et notamment pourvu d'une ou plusieurs poignée(s) (non illustrées) permettant à un opérateur la manipulation du dispositif portatif. L'une des poignées peut notamment être équipée d'une gâchette (non illustrée) de commande de manière connue en soi, pour actionner l'usinage.

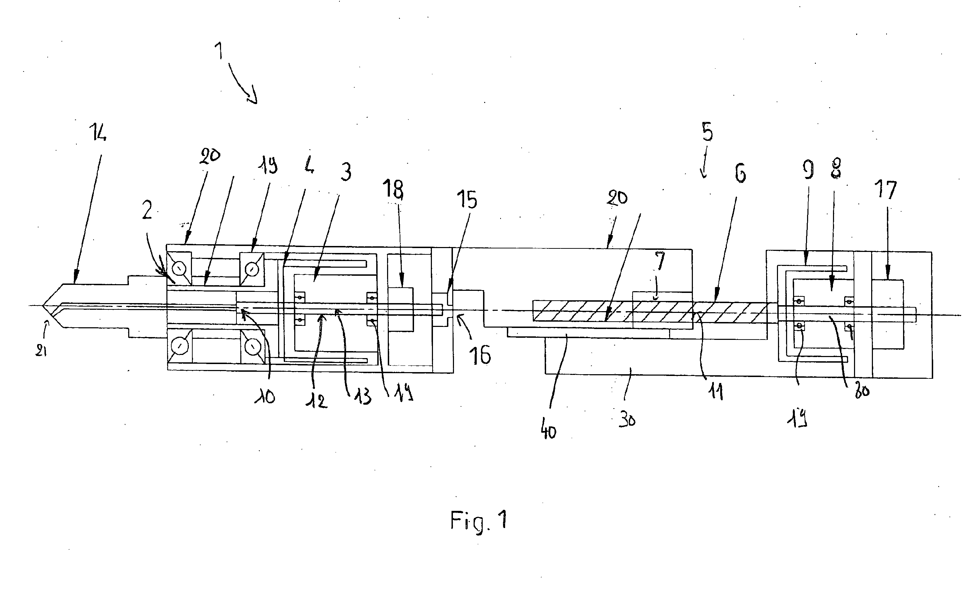

Selon un mode de réalisation, ledit moteur 3,4 est dit premier moteur 3,4 et ledit actionneur linaire 5 comprend un système vis à billes 6, 7 et un deuxième moteur 8, 9. Selon l'exemple de réalisation illustré à la figure 1, le deuxième moteur 8,9 peut être un moteur électrique et le rotor 9 du deuxième moteur 8, 9 est en montage direct sur la vis 6 de l'actionneur linéaire 5, solidaire rigidement avec ladite vis 6.

Le montage direct du rotor 9 du deuxième moteur 8, 9 sur la vis 6 permet d'éviter la présence d'un réducteur entre ces deux éléments permettent de limiter l'encombrement du dispositif, mais également d'éviter la présence d'un jeu inhérent aux engrenages d'un réducteur.

Selon un mode de réalisation illustré, le rotor 9 dudit deuxième moteur 8, 9 peut être extérieur au stator 8 dudit deuxième moteur

L'utilisation d'un moteur à rotor externe pour le deuxième moteur 8, 9 permet de limiter le nombre de roulements 20 pour le guidage simultané en rotation du rotor 9 et de la vis 6.

Les moteurs, utilisés pour le premier moteur 3, 4 et/ou le deuxième moteur 8, 2 peuvent être des moteurs électriques brushless et à basse tension (inférieure à 48 volts) haute performance. Ces moteurs ont des performances puissance/poids très avantageux (supérieur à 5 W/g) et utilisent des technologies d'aimants à haut point de Curie (200 ° environ) et des fils de bobinage dont les isolants peuvent supporter des températures de 180°C. De tels moteurs sont notamment commercialisés par la Société Scorpion Power System Ltd.

Selon un mode de réalisation illustré à la figure 1, le deuxième support 30 embarque ledit deuxième moteur 8,9, le stator 9 dudit deuxième moteur 8,9 étant solidaire en translation avec ledit deuxième support 30, l'écrou 7 du système vis à billes 6,7 étant solidaire en translation avec ledit premier support 20. Alternativement selon un mode de réalisation non illustré le premier support 20 embarque ledit deuxième moteur 8,9, le stator 9 du dudit deuxième moteur 8,9 étant solidaire en translation avec ledit premier support 20, l'écrou 7 du système vis à billes 6,7 étant solidaire en translation avec ledit deuxième support 30.

Selon un mode de réalisation illustré à la figure 1, l'axe de rotation 10 du porte-outil de l'axe de rotation 11 de la vis 6 du système vis à billes 6, 7 sont parallèles et confondus. Alternativement, selon un mode de réalisation non illustré, de moindre encombrement, l'axe de rotation du porte-outil 2 et l'axe de rotation de la vis 6 du système vis à billes 6, 7 peuvent être parallèles et non confondus, ledit ensemble porte-outil 2 et premier moteur 3, 4 étant positionnés juxtaposés latéralement audit actionneur linéaire 5.

Selon un mode de réalisation, illustré à la figure 1, le porte-outil 2 présente un arbre de rotation 12 solidaire du rotor 4 du premier moteur 3, 4, ledit arbre de rotation présentant une canalisation 13 pour un fluide destiné à lubrifier l'outil de coupe 14, ainsi qu'un joint tournant 15 assurant l'étanchéité entre une extrémité de l'arbre de rotation 12 et un port d'entrée 16 pour le fluide.

Selon cet exemple, l'outil de coupe 14 peut être pourvu d'une canalisation interne destinée pour canaliser le fluide depuis la canalisation 13 de l'arbre de rotation jusqu'à l'arête de coupe de l'outil de coupe 14.

Le dispositif 1 peut présenter un codeur angulaire 17 ciblant la rotation de la vis 6 du système vis à billes 6, 7 ainsi qu'une électronique de contrôle et de puissance (non illustrée) pour le contrôle dudit premier moteur 3, 4 et du deuxième moteur 8, 9 comprenant pour entrée au moins le signal émis par ledit codeur angulaire 17. Avantageusement, cette électronique peut être intégré dans le boîtier de l'outil portatif, intérieure à ce boîtier.

Le dispositif portatif peut présenter, outre le codeur angulaire 17 ciblant la rotation de la vis 6, dit premier codeur angulaire, un deuxième codeur angulaire 18 ciblant la rotation du porte-outil 2.

L'électronique de contrôle et de puissance pour le contrôle du premier moteur 3, 4 et du deuxième moteur 8, 9 présente alors pour entrées, outre le signal émis par le premier codeur angulaire 17, le signal émis par ledit deuxième codeur angulaire 18.

Nous décrivons maintenant en détail le mode de réalisation illustré à la figure 1.

Le mécanisme du dispositif portatif d'usinage comprend un premier support 20 creux, ce support reçoit intérieurement un arbre de rotation 12 guidé en rotation grâce à deux roulements 19, à billes, prévus entre ledit arbre et le support 20. Cet arbre 12 est solidaire de manière rigide, d'une part, d'un porte-outil 2 auquel est assujetti de manière rigide un outil de coupe 14, et d'autre part solidaire de manière rigide d'un rotor 4 dudit premier moteur 3, 4. Le stator 3 du premier moteur 3, 4 est quant à lui solidaire de manière rigide du support 20. Un codeur angulaire 18 permet de cibler la rotation de l'arbre 12.

Cet arbre de rotation 12 est creux et constitue une canalisation 13 pour un fluide destiné à lubrifier l'outil de coupe 14. L'une des extrémités de la canalisation 13 est associée à un joint tournant 15 qui permet d'assurer l'étanchéité entre l'extrémité de l'arbre 12 et un port d'entrée 16 du support 20. La canalisation de l'arbre 12 du porte-outil 2 est prolongée intérieurement dans l'outil de coupe 14, la canalisation 13 débouchant au niveau de l'arête de coupe de l'outil 14.

Le deuxième moteur 8, 9 de l'actionneur linéaire 5 est prévu au niveau d'un deuxième support 30. Le stator 8 du deuxième moteur 8, 9 est intérieur au rotor 9. Le stator 8 est solidaire au deuxième support 30. Le rotor 9, externe au stator 8, est monté tournant guidé en rotation grâce à un roulement à billes 19 entre l'arbre du moteur.

Le rotor 9 du deuxième moteur 8, 9 est solidaire de manière rigide avec la vis 6 du système vis à billes 6. L'écrou 7 du système vis à billes 6, 7 est solidaire au premier support 20. Une liaison glissière (lesdits moyens de guidage en translation 40) d'axe parallèle à l'axe de la vis à billes 6 est prévue entre le premier support 20 et le deuxième support 30. Cette liaison glissière permet de guider en translation l'ensemble comprenant le premier support 20, le premier moteur 3, 4 et l'outil de coupe 14 par rapport à l'ensemble comprenant le deuxième support 30 et le deuxième moteur 8, 9. Un codeur angulaire 17 permet de cibler la rotation de l'arbre de rotation dudit deuxième moteur 8, 9.

Selon un mode de réalisation (non illustré) l'actionneur linéaire 5 constitué selon l'exemple par le système vis à billes 6,7 et ledit deuxième moteur 8,9 peut être remplacé par un actionneur linaire constitué par moteur linéaire.

Selon ce mode de réalisation, le dispositif peut présenter un codeur linéaire ciblant le déplacement du premier support par rapport au deuxième support, ainsi qu'une électronique de contrôle et de puissance (non illustrée) pour le contrôle, d'une part, du moteur agencé pour animer le porte-outil en rotation et, d'autre part, le contrôle dudit moteur linéaire. Cette électronique comprend pour entrée au moins le signal émis par le codeur linéaire.

Avantageusement, cette électronique peut être intégrée dans le boîtier du dispositif portatif recevant le mécanisme, intérieur à ce boîtier.

Le dispositif portatif peut présenter, outre le codeur linéaire ciblant le déplacement du premier support par rapport au deuxième support, un codeur angulaire ciblant la rotation du porte-outil. L'électronique de contrôle et de puissance présente alors pour entrée, outre le signal émis par le codeur linéaire, le signal émis par le codeur angulaire.

Naturellement, d'autres modes de réalisation auraient pu être envisagés par l'homme du métier sans pour autant sortir du cadre de l'invention définie par les revendications ci-après.

## Revendications

1. Dispositif portatif (1) d'usinage, en particulier de perçage, présentant un mécanisme comprenant :
- un premier support (20) embarquant :
- un porte-outil (2),
- un moteur (3, 4) agencé pour animer le porte-outil (2) d'un mouvement de rotation,
- un deuxième support (30) et des moyens (40) de guidage en translation entre le premier support (20) et ledit deuxième support (30),
- un actionneur linéaire (5) permettant l'éloignement du premier support (20) par rapport audit deuxième support (30) et le rapprochement du premier support (20) par rapport audit deuxième support (30), le moteur (3, 4) permettant d'animer le porte-outil (2) d'un mouvement de rotation, dont l'axe de rotation est parallèle à l'axe de déplacement de l'actionneur linéaire (5) **caractérisé en ce que** :
- ledit actionneur linéaire est constitué par un moteur linéaire, ou alternativement,
- ledit moteur (3,4) est dit premier moteur (3,4) et dans lequel ledit actionneur linaire (5) comprend un système vis à billes (6, 7) et un deuxième moteur (8, 9), le deuxième moteur étant un moteur électrique et dans lequel le rotor (9) du deuxième moteur (8, 9) est en montage direct sur la vis (6) de l'actionneur linéaire (5), solidaire rigidement avec ladite vis (6),
et dans lequel le moteur (3, 4), agencé pour animer le porte-outil (2) d'un mouvement de rotation est un moteur électrique et le rotor (4) du moteur (3, 4) est en montage direct sur le porte-outil (2), solidaire rigidement avec ledit porte outil (2).

2. Dispositif selon la revendication 1, dans lequel le rotor (4) du moteur (3, 4) est extérieur au stator (3) dudit moteur.

3. Dispositif selon la revendication 1 ou 2, dans lequel le premier moteur 3, 4 et/ou le deuxième moteur 8, 2 sont des moteurs électriques brushless et à basse tension, inférieure à 48 volts, haute performance.

4. Dispositif selon l'une des revendications 1 à 3, dans lequel ledit moteur (3,4) est dit premier moteur (3,4) et dans lequel ledit actionneur linéaire (5) comprend ledit système vis à billes (6, 7) et le deuxième moteur (8, 9), , électrique et dans lequel le rotor (9) du deuxième moteur (8, 9) est en montage direct sur la vis (6) de l'actionneur linéaire (5), solidaire rigidement avec ladite vis (6).

5. Dispositif selon la revendication 4, dans lequel le deuxième support (30) embarque ledit deuxième moteur (8,9), le stator (9) du dudit deuxième moteur (8,9) étant solidaire en translation avec ledit deuxième support (30), l'écrou (7) du système vis à billes (6,7) étant solidaire en translation avec ledit premier support (20).

6. Dispositif selon la revendication 4 dans lequel le premier support (20) embarque ledit deuxième moteur (8,9), le stator (9) du dudit deuxième moteur (8,9) étant solidaire en translation avec ledit premier support (20), l'écrou (7) du système vis à billes (6,7) étant solidaire en translation avec ledit deuxième support (30).

7. Dispositif selon l'une des revendications 4 à 6, dans lequel le rotor (9) dudit deuxième moteur (8, 9) est extérieur au stator (8) dudit deuxième moteur.

8. Dispositif selon l'une des revendications 4 à 7, dans lequel l'axe de rotation (10) du porte-outil (2) et l'axe de rotation (11) de la vis (6) du système vis à billes (6, 7) sont parallèles et confondus.

9. Dispositif selon l'une des revendications 4 à 7, dans lequel l'axe de rotation du porte-outil (2) et l'axe de rotation de la vis (6) du système vis à billes (6, 7) sont parallèles et non confondus, ledit ensemble porte-outil (2) et premier moteur (3, 4) étant positionné juxtaposé latéralement audit actionneur linéaire (5).

10. Dispositif selon l'une des revendications 4 à 9, présentant un codeur angulaire (17) ciblant la rotation de la vis (6) du système vis à billes (6, 7), ainsi qu'une électronique de contrôle et de puissance pour le contrôle dudit premier moteur (3, 4) et dudit deuxième moteur (8, 9) présentant pour entrée le signal émis par ledit codeur angulaire (17).

11. Dispositif selon la revendication 10, présentant, outre le codeur angulaire (17) ciblant la rotation de la vis (6), dit premier codeur angulaire, un deuxième codeur angulaire (18) ciblant la rotation dudit porte-outil (2), ladite électronique de contrôle et de puissance pour le contrôle dudit premier moteur (3, 4) et dudit deuxième moteur (8, 9) présentant pour entrée, outre le signal émis par le premier codeur angulaire (17), le signal émis par ledit deuxième codeur angulaire (18).

12. Dispositif selon la revendication 10 ou 11, dans lequel ledit mécanisme est intégré dans un boîtier notamment pourvue d'une poignée, ladite électronique de contrôle et de puissance étant intérieure et intégrée audit boîtier dudit dispositif portatif.

13. Dispositif selon l'une des revendications 1 à 12, le porte-outil présente un arbre de rotation (12) solidaire du rotor (4) du moteur (3, 4), dit premier moteur, ledit arbre de rotation (12) présentant une canalisation (13) pour un fluide destiné à lubrifier un outil coupe (14), ainsi qu'un joint tournant (15) assurant l'étanchéité entre une extrémité de l'arbre de rotation (12) et un port d'entrée (16) pour le fluide.

14. Dispositif selon l'une des revendications 1, 2 ou 13, dans lequel ledit actionneur linéaire est constitué par un moteur linéaire.

15. Dispositif selon l'une des revendications 1 à 14, dans lequel le mécanisme est intégré dans un boîtier pourvu d'une ou plusieurs poignée(s) permettant à un opérateur la manipulation du dispositif portatif.

## Patentansprüche

1. Tragbare Bearbeitungsvorrichtung (1), insbesondere zum Bohren, die einen Mechanismus aufweist, umfassend:
- eine erste Halterung (20), tragend:
* einen Werkzeugträger (2),
* einen Motor (3, 4), der dazu vorgesehen ist, den Werkzeugträger (2) drehend anzutreiben,
- eine zweite Halterung (30) und Mittel (40) zur translativen Führung zwischen der ersten Halterung (20) und der zweiten Halterung (30),
- einen linearen Aktuator (5), der das Wegbewegen der ersten Halterung (20) in Bezug zu der zweiten Halterung (30) und der die Annäherung der ersten Halterung (20) in Bezug zu der zweiten Halterung (30) ermöglicht, wobei es der Motor (3, 4) ermöglicht, den Werkzeugträger (2) in einer Drehbewegung anzutreiben, deren Drehachse parallel zur Bewegungsachse des linearen Aktuators (5) ist,
**dadurch gekennzeichnet, dass**:
- der lineare Aktuator ein Linearmotor ist, oder alternativ
- wobei der Motor (3, 4), erster Motor (3, 4) genannt wird, und wobei der lineare Aktuator (5) ein Kugelspindelsystem (6, 7) umfasst, und einen zweiten Motor (8, 9), wobei der zweite Motor ein Elektromotor ist, wobei der Rotor (9) des zweiten Motors (8, 9) direkt auf der Spindel (6) des linearen Aktuators (5) montiert ist, starr mit der Spindel (6) verbunden,
und wobei der Motor (3, 4), der dazu vorgesehen ist, den Werkzeugträger (2) in drehend anzutreiben, ein Elektromotor ist, und der Rotor (4) des Motors (3, 4) direkt auf dem Werkzeugträger (2) montiert ist, starr mit dem Werkzeugträger (2) verbunden.

2. Vorrichtung nach Anspruch 1, bei der der Rotor (4) des Motors (3, 4) außerhalb des Stators (3) des Motors angeordnet ist.

3. Vorrichtung nach Anspruch 1 oder 2, bei der der erste Motor 3, 4 und/oder der zweite Motor 8, 2 bürstenlose Elektromotoren mit Niederspannung unter 48 Volt mit hoher Leistung sind.

4. Vorrichtung nach einem der Ansprüche 1 bis 3, bei der der Motor (3, 4) erster Motor (3, 4) genannt wird, und der lineare Aktuator (5) das Kugelspindelsystem (6, 7) umfasst, und der zweiten Motor (8, 9) elektrisch ist, wobei der Rotor (9) des zweiten Motors (8, 9) direkt auf der Spindel (6) des linearen Aktuators (5) montiert ist, starr mit der Spindel (6) verbunden.

5. Vorrichtung nach Anspruch 4, bei der die zweite Halterung (30) den zweiten Motor (8, 9) trägt, wobei der Stator (9) des zweiten Motors (8, 9) in Translation mit der zweiten Halterung (30) verbunden ist, wobei die Mutter (7) des Kugelspindelsystems (6, 7) in Translation mit der ersten Halterung (20) verbunden ist.

6. Vorrichtung nach Anspruch 4, bei der die erste Halterung (20) den zweiten Motor (8, 9) umfasst, wobei der Stator (9) des zweiten Motors (8, 9) in Translation mit der ersten Halterung (20) verbunden ist, wobei die Mutter (7) des Kugelspindelsystems (6, 7) in Translation mit der zweiten Halterung (30) verbunden ist.

7. Vorrichtung nach einem der Ansprüche 4 bis 6, bei der der Rotor (9) des zweiten Motors (8, 9) außerhalb des Stators (8) des zweiten Motors angeordnet ist.

8. Vorrichtung nach einem der Ansprüche 4 bis 7, bei der die Drehachse (10) des Werkzeugträgers (2) und die Drehachse (11) der Spindel (6) des Kugelspindelsystems (6, 7) parallel sind und zusammenfallen.

9. Vorrichtung nach einem der Ansprüche 4 bis 7, bei der die Drehachse des Werkzeugträgers (2) und die Drehachse der Spindel (6) des Kugelspindelsystems (6, 7) parallel sind und nicht zusammenfallen, wobei die Einheit aus Werkzeugträger (2) und erstem Motor (3, 4) nebeneinander seitlich zum linearen Aktuator (5) angeordnet ist.

10. Vorrichtung nach einem der Ansprüche 4 bis 9, umfassend einen Winkelencoder (17), der die Drehung der Spindel (6) des Kugelspindelsystems (6, 7) festlegt, sowie eine Kontroll- und Leistungselektronik zur Kontrolle des ersten Motors (3, 4) und des zweiten Motors (8, 9), die das von dem Winkelencoder (17) entsandte Signal als Eingangssignal aufweist.

11. Vorrichtung nach Anspruch 10, umfassend außer dem, als erstem Winkelencoder bezeichneten, Winkelencoder (17), der die Drehung der Spindel (6) festlegt, einen zweiten Winkelencoder (18), der die Drehung des Werkzeugträgers (2) festlegt, wobei die Kontroll- und Leistungselektronik zur Kontrolle des ersten Motors (3, 4) und des zweiten Motors (8, 9) außer dem von dem ersten Winkelencoder (17) entsandten Signal das von dem zweiten Winkelencoder (18) entsandte Signal als Eingangssignal aufweist.

12. Vorrichtung nach Anspruch 10 oder 11, bei der der Mechanismus in ein Gehäuse integriert ist, das insbesondere mit einem Griff versehen ist, wobei die Kontroll- und Leistungselektronik innerhalb des Gehäuses angeordnet und in das Gehäuse der tragbaren Vorrichtung integriert ist.

13. Vorrichtung nach einem der Ansprüche 1 bis 12, wobei der Werkzeugträger eine Rotationswelle (12), die mit dem Rotor (4) des als erstem Motor bezeichnetem, Motors (3, 4), verbunden ist, aufweist, wobei die Rotationswelle (12) einen Kanal (13) für ein Fluid aufweist, das dazu bestimmt ist, ein Schneidwerkzeug (14) zu schmieren, sowie einen Drehdichtungsanschluss (15), der die Dichtigkeit zwischen einem Ende der Rotationswelle (12) und einem Einlasspunkt (16) für das Fluid gewährleistet.

14. Vorrichtung nach einem der Ansprüche 1, 2 oder 13, bei der der lineare Aktuator von einem Linearmotor gebildet ist.

15. Vorrichtung nach einem der Ansprüche 1 bis 14, bei dem der Mechanismus in ein Gehäuse integriert ist, das mit einem oder mehreren Griffen versehen ist, die einem Bediener die Handhabung der tragbaren Vorrichtung ermöglichen.

## Claims

1. Handheld machining device (1), in particular for boring, having a mechanism comprising:
- a first mounting (20) which carries:
- a tool holder (2),
- a motor (3, 4) arranged to rotate the tool holder (2),
- a second mounting (30) and means for translatably guiding (40) between the first mounting (20) and said second mounting (30),
- a linear actuator (5) enabling the first mounting (20) to be spaced apart from the said second mounting (30) and the first mounting (20) to be brought toward said second mounting (30), the motor (3, 4) arranged to rotate the tool holder (2), of which the axis of rotation is parallel to the axis of displacement of the linear actuator (5) **characterised in that**
- said linear actuator is comprised of a linear motor, or alternatively,
- said motor (3, 4) is said first motor (3, 4) and wherein said linear actuator (5) comprises a ball screw system (6, 7) and a second motor (8, 9), wherein the second motor is an electric motor and wherein the rotor (9) of the second motor (8, 9) is directly mounted onto the screw (6) of the linear actuator (5), rigidly integral with said screw (6)
and wherein the motor (3, 4) arranged to rotate said tool holder (2) is an electric motor and the rotor (4) of the motor (3, 4) is directly mounted onto the tool holder (2), rigidly integral with said tool holder (2).

2. Device according to claim 1, wherein the rotor (4) of the motor (3, 4) is exterior to the stator (3) of said motor.

3. Device according to claim 1 or 2, whereinsaid first motor (3, 4) and/or the second motor (8, 9) are high-performance brushless electric motors and of low voltage, less than 48 volt.

4. Device according to one of claims 1 to 3,wherein said motor (3, 4) is said first motor (3, 4) and wherein said linear actuator (5) comprises said ball screw system (6, 7) and said second motor (8, 9), wherein the second motor is said electric motor and wherein the rotor (9) of the second motor (8, 9) is directly mounted onto the screw (6) of the linear actuator (5), rigidly integral with said screw (6).

5. Device according to claim 4, wherein the second mounting (30) carries said second motor (8, 9), the stator (9) of said second motor (8, 9) being integral in translation with said second mounting (30), the nut (7) of the ball screw system (6, 7) being integral in translation with said first mounting (20).

6. Device according to claim 4 wherein the first mounting (20) carries said second motor (8, 9), the stator (9) of said second motor (8, 9) being integral in translation with said first mounting (20), the nut (7) of the ball screw system (6, 7) being integral in translation with said second mounting (30).

7. Device according to one of claims 4 to 6, wherein the rotor (9) of said second motor (8, 9) is exterior to the stator (8) of said second motor.

8. Device according to one of claims 4 to 7, wherein the axis of rotation (10) of the tool holder (2) and the axis of rotation (11) of the screw (6) of the ball screw system (6, 7) are parallel and coaxial.

9. Device according to one of claims 4 to 7, wherein the axis of rotation of the tool holder (2) and the axis of rotation of the screw (6) of the ball screw system (6, 7) are parallel and not coaxial, said unit formed by tool holder (2) and first motor (3, 4) being positioned juxtaposed laterally to said linear actuator (5).

10. Device according to one of claims 4 to 9, having an angular encoder (17) targeting the rotation of the screw (6) of the ball screw system (6, 7), as well as power and control electronics for controlling said first motor (3, 4) and said second motor (8, 9) having for input the signal emitted by said angular encoder (17).

11. Device according to claim 10, having, in addition to the angular encoder (17) targeting the rotation of the screw (6), said first angular encoder, a second angular encoder (18) targeting the rotation of said tool holder (2), said power and control electronics for controlling said first motor (3, 4) and second motor (8, 9) having for input, in addition to the signal emitted by the first angular encoder (17), the signal emitted by said second angular encoder (18).

12. Device according to claim 10 or 11, wherein said mechanism is integrated into a case in particular provided with a handle, said power and control electronics being interior and integrated into said case of said handheld device.

13. Device according to one of claims 1 to 12, the tool holder has a rotating shaft (12) integral with the rotor (4) of the motor (3, 4), said first motor, said rotating shaft (12) having a duct (13) for a fluid intended to lubricate a cutting tool (14), as well as a rotating seal (15) providing the seal between one end of the rotating shaft (12) and an inlet port (16) for the fluid.

14. Device according to one of claims 1, 2 or 13, wherein said linear actuator is comprised of a linear motor.

15. Device according to one of the claims 1 to 14, wherein the mechanism is integrated into a case provided with one or several handles(s) allowing an operator to manipulate the handheld device.
